# EUROPÄISCHE PATENTSCHRIFT

(11) **EP 2 772 128 B1**
(45) Veröffentlichungstag und Bekanntmachung des Hinweises auf die Patenterteilung: **19.07.2017**
(21) Anmeldenummer: 14155363.6
(22) Anmeldetag: 17.02.2014
(51) Int. Cl.: A01D 34/535, A01G 23/093

(54) **Schlegelmesser sowie Messerwelle hierfür**
Flail knife and cutter block for the same
Fléau et porte-outils correspondant

(30) Priorität: 28.02.2013 DE 102013101969
(43) Veröffentlichungstag der Anmeldung: 03.09.2014
(73) Patentinhaber: MULAG Fahrzeugwerk Heinz Wössner GmbH & Co. KG, 77728 Oppenau (DE)
(72) Erfinder: Nalesini, Stefano, 77728 Oppenau (DE)
(74) Vertreter: Weickmann & Weickmann PartmbB

(56) Entgegenhaltungen:
- DE-A1- 2 427 743
- DE-U- 7 504 816
- US-A- 5 003 759
- US-A1- 2006 230 733
- US-A1- 2008 060 333

## Beschreibung

### I. Anwendungsgebiet

Die Erfindung betrifft ein Schlegelmesser, wie es in rotierenden Messerwellen verwendet wird, um zum Beispiel unerwünschten Bewuchs durch Überfahren mit der Messerwelle zu entfernen, sei es Gras oder Gestrüpp.

### II. Technischer Hintergrund

Dabei rotiert die Messerwelle um eine in der Regel etwa horizontale, quer zur Fahrtrichtung des Mähgerätes rotierende Achse, und nahe des Außenumfanges der Messerwelle ist auf jeweils einem parallel zur Rotationsachse liegenden Lagerbolzen jeweils ein Schlegelmesser montiert, dessen Schneidkante ebenfalls etwa parallel zur Rotationsachse liegt und betrachtet in Richtung der Rotationsachse meist eine S-Form oder eine Bogen-Form besitzt, an deren äußerem freien Ende die Schneidkante angeordnet ist.

Jedes der Schlegelmesser ist um seinen Lagerbolzen begrenzt verschwenkbar, um beim Anlaufen gegen einen zu starken Widerstand, beispielsweise ein Holzteil, welches zu dick ist um von dem Schlegelmesser einfach durchschlagen zu werden, in Umfangsrichtung der Messerwelle nach hinten und innen ausweichen zu können und die Messerwelle nicht zu stark abzubremsen. Bei maximaler Auslenkung schlägt das Schlegelmesser dabei mit seiner Rückseite am Außenumfang der Messerwelle an.

Dabei treten eine Reihe von Problemen auf:
Ein Problem besteht darin, dass über die axiale Erstreckung der Messerwelle im Betrieb die Schlegelmesser ungleichmäßig abgenutzt werden, beispielsweise an einem axialen Ende eine schnellere Abnutzung der dortigen Schlegelmesser erfolgt, weil dieses Ende der Messerwelle häufig auf hartem Untergrund, beispielsweise dem Randbereich eines Straßenbelages, aufschlägt, neben dem der Bewuchs geschnitten werden soll.

Da eine Abnutzung bei den meisten bekannten Messerformen eine Verkürzung in radialer Richtung bedeutet, ergibt sich über die Länge der Messerwelle dadurch ein ungleichmäßiger wirksamer Durchmesser der Messerwelle und damit eine sich verändernde Schnitthöhe entlang der Messerwelle. Außerdem wird die Messerwelle dadurch zunehmend unwuchtig.

Ein weiteres Problem besteht darin, dass nach bereits relativ kurzem Verschleiß die Schneidkante so stark gerundet ist, dass die Schlegelmesser ausgebaut und nachgeschliffen werden müssen, was in der Regel jedoch nicht für alle Schlegelmesser in gleicher Weise notwendig ist und geschieht, so dass die nach dem Schleifen wieder eingebauten Schlegelmesser ebenfalls eine insgesamt nicht mehr ausgewuchtete Messerwelle ergeben.

Wegen der hohen Drehzahlen von circa **2000** Umdrehungen pro Minute bei einer Messerwelle zum Gras mähen und der hohen bewegten Massen muss eine solche Messerwelle, insbesondere nach dem Schärfen der Messer wieder ausgewuchtet werden, um im Betrieb Schäden durch Vibrationen an der Aufhängung der Messerwelle und dem nachgeordneten Auslegerarm zu vermeiden, was einen hohen Arbeitsaufwand darstellt.

Ein weiterer Nachteil besteht darin, dass die Schlegelmesser selbst und damit auch eine mit diesen spezifischen Schlegelmessern ausgestattete Messerwelle primär für eine ganz bestimmte Aufgabe und für ein ganz bestimmtes Schneidgut ausgelegt ist, beispielsweise Gras in einem Fall oder Buschwerk mit dicken Ästen im anderen Fall. Gerade Mischbewuchs oder sich schnell ändernder Bewuchs stellt eine solche Messerwelle vor praktisch unlösbare Probleme. Natürlich ist ein Umrüsten der Messerwelle auf eine andere Messerform möglich, der Arbeitsaufwand hierfür einschließlich des Aufwuchtens ist jedoch ganz erheblich.

Aus der US 5,003,759 ist eine Messerwelle mit Schlegelmessern bekannt, deren Messerkopf symmetrisch ausgebildet ist und wobei in beide Drehrichtungen der Messerwelle jeweils eine gleich gestaltete, in axialer Richtung durchgehende, Schneidkante vorhanden ist.

Aus dem deutschen Gebrauchsmuster GM 7504816 ist ein Messerkopf bekannt, bei dem die einzelnen Schlegelmesser auf kurzen, zwischen zwei Radialblechen befestigten, Lagerzapfen gelagert sind.

Aus der DE 24277431 ist es bekannt, einen Messerkopf mit Schlegelmessern, die in beide Drehrichtungen Schneiden aufweisen, auch in unterschiedliche Drehrichtungen anzutreiben.

### III. Darstellung der Erfindung

### a) Technische Aufgabe

Es ist daher die Aufgabe gemäß der Erfindung, ein Schlegelmesser sowie eine damit ausgestattete Messerwelle zu schaffen, die eine zum auftretenden Verschleiß unterproportionale entstehende Unwucht aufweisen, seltener nachgeschliffen werden müssen und auch bei zu starkem Bewuchs noch eingesetzt werden können.

### b) Lösung der Aufgabe

Diese Aufgabe wird durch die Merkmale der Ansprüche **1** und **12** gelöst. Vorteilhafte Ausführungsformen ergeben sich aus den Unteransprüchen.

Die Grundidee des Schlegelmessers besteht in den beiden in entgegengesetzte Umfangsrichtungen weisenden Schneidkanten, die für unterschiedliche Einsatzzwecke ausgestaltet sind. Um die Schlegelmesser für den jeweiligen Einsatzzweck nicht ummontieren zu müssen, kann die Messerwelle in beide Drehrichtungen angetrieben werden.

Um bei Einsatz einer der beiden Schneidkanten und einem Zurückschlagen des Schlegelmessers von einem starken Hindernis nicht die andere Schneidkante zu schädigen durch Anschlagen am Körper der Messerwelle, ist die Messerwelle so gestaltet, dass die Schlegelmesser in ihren Halterungen der Messerwelle um mehr als **360°** schwenken, also vollständig durchdrehen, können.

Für den Einsatz in beide Drehrichtungen ist das Schlegelmesser - betrachtet in Richtung seiner Schwenkachse - annähernd symmetrisch ausgestaltet und etwa pilzförmig mit einem Messerkopf, an dessen beiden in Umfangsrichtung entgegengesetzten Enden sich jeweils eine Schneidkante befindet, und der über einen insbesondere exakt radial verlaufenden Schaft mit dem Lagerauge verbunden ist.

In axialer Richtung betrachtet ist die Kontur des Messerkopfes und Schaftes zusammen Y-förmig, wobei insbesondere der Schaft von seiner schmalsten Stelle im mittleren Bereich zum Lagerauge hin breiter wird und ohne Absatz in diesen übergeht und er ebenfalls in Richtung Messerkopf breiter wird, in den Messerkopf aber vorzugsweise mit einem Absatz übergeht, der eine konvexe nach außen vorstehende Ecke bildet. Dadurch wird das Nachschleifen der Schneidkante von unten ermöglicht.

Von der Schwenkachse des Schlegelmessers aus betrachtet erstreckt sich der Messerkopf somit über einen Winkelsegment von mindestens **45°**, besser **50°**, besser **55°**.

Dabei ist die eine Schneidkante in ihrem Verlauf ohne Absatz durchgehend ausgebildet, und insbesondere gerade und insbesondere parallel zur Schwenkachse des Schlegelmessers und für leichten Bewuchs wie Gras vorgesehen.

Die andere Schneidkante dagegen weist mindestens eine Unterbrechung in ihrer Verlaufsrichtung auf, und die dadurch entstehenden mindestens **2** Teil-Schneidkanten gehen vorzugsweise auch nicht bis zum axial äußeren Ende des Schneidkopfes durch. Die Summe der Länge der Teilschneidkanten ist dadurch geringer als die der durchgehenden Schneidkante, wodurch die Kraft des gegen das Schneidgut schlagenden Schlegelmessers auf eine geringere Auftreff-Fläche konzentriert wird und damit auch das Durchschlagen von kleineren Ästen eines Gestrüpps möglich wird.

Die die Teil-Schneidkanten seitlich begrenzenden Flanken laufen zum Boden der Einkerbungen hin aufeinander zu, was eine verbesserte Stabilität der so entstehenden Zähne dieser Schneidkante ergibt, ohne die Schlagkraft zu beeinträchtigen.

Zu diesem Zweck beträgt die Summe der Teilschneidkanten zusammen maximal **80**%, besser maximal **70**% der axialen Länge der geraden Schneidkante und/oder der axialen Länge des Messerkopfes.

Die Teilschneidkanten sind vorzugsweise in ihrer Verlaufsrichtung gerade ausgerichtet.

Um das Auftreten einer Unwucht der rotierenden Messerwelle bei Verschleiß an diesen Schlegelmessern unterproportional zu halten, weisen die Schlegelmesser eine starke Massenkonzentration in einem weit radial außen liegenden Bereich, nämlich im Messerkopf auf, der alleine mindestens **70**% der Masse des gesamten Schlegelmessers besitzt. Der Schwerpunkt der Querschnittskontur - betrachtet in axialer Richtung - und/oder der reale Schwerpunkt des Schlegelmessers ist dabei nicht weiter als **20**%, besser nicht weiter als **15**% des Flugkreisradius des Schlegelmessers von dessen Flugkreis radial nach innen versetzt.

Aus dem gleichen Grund ist die axiale Länge des Messerkopfes größer als die axiale Länge des Lagerauges, vorzugsweise um mindestens **30**% größer, und auch die axiale Länge des Schaftes deutlich geringer als die axiale Länge des Messerkopfes und auch geringer als die axiale Länge des Lagerauges. Insbesondere beträgt die axiale Länge des Schaftes maximal **70**%, besser maximal **60**% der axialen Länge des Messerkopfes. Die Dicke des Schaftes beträgt an seiner dünnsten Stelle - betrachtet in axialer Richtung - maximal **30**%, besser maximal **20**%, besser maximal **17**% der Breite des Messerkopfes, und/oder der Querschnitte des Schaftes geschnitten in axialer Richtung und besitzt gerundete, insbesondere spitzbogenförmige Enden. Zusätzlich zu dieser Positionierung des Schwerpunktes ist gewünscht, dass die Schlegelmesser zumindest teilweise selbstschärfende Eigenschaften aufweisen, also die Abnutzung der Schneidkanten nicht nur zu einer Verrundung der Schneidkanten führt, sondern durch Abnutzung möglichst beider an die Schneidkante angrenzenden Flanken ein Nachschärfeffekt auftritt.

Dies wird erreicht, indem zum einen der Schneidwinkel zwischen der Unterseite der Schneidkante und der Außenkontur des Messerkopfes in einem bestimmten Winkelbereich liegt, nämlich < **60°,** besser < **50°**, besser < **44°** und/oder > **30°,** besser > **35°,** besser > **42°.**

Ebenfalls aus diesem Grund ist - in axialer Richtung betrachtet - der Messerkopf mit einer Außenkontur gestaltet, die konvex gekrümmt ist, und deren Krümmungsradius höchstens **220**%, besser höchstens **210**%, besser höchstens **200**% des Flugkreisradius des Schlegelmessers beträgt.

Dadurch ist einerseits sichergestellt, dass die Schneidkante das radial am weitesten nach außen ragende Element des Schlegelmessers von dessen Schwenkachse aus ist, andererseits jedoch der Schwerpunkt dennoch sehr weit außen gehalten werden kann, und wegen des spezifischen Schneidwinkels und der sich daraus ergebenden Lage der Flanken zur Schneidkante bei einer Abnutzung sowohl die Unterseite als auch die Außenkontur der Schneidkante abgenutzt wird und dadurch ein Selbstschärfungseffekt eintritt.

Um die Vorteile vor allem dieser spezifischen Bauform von zweiseitigen Schlegelmessern ausnutzen zu können, ist eine bestimmte Ausgestaltung der Messerwelle notwendig, die zunächst einmal einen Antrieb aufweisen muss, der die Messerwelle wahlweise in beiden Drehrichtungen antreiben kann. Darüber hinaus sollten die Aufnahmen für die Schlegelmesser so gestaltet sein, dass ein Durchschwenken um **360°** oder auch mehr der Schlegelmesser um ihre Aufhängung, das Lagerauge, möglich ist.

Gleichzeitig soll die Messerwelle natürlich dennoch einerseits einfach aufgebaut und stabil sein.

Zu diesem Zweck besteht die Messerwelle aus einer Zentralwelle, an deren axialen Enden die Lagerzapfen vorstehen, an denen die Messerwelle gelagert wird. Die Aufnahmen für die Schlegelmesser befinden sich radial im Abstand außerhalb der Zentralwelle:
Über den Umfang verteilt und parallel zur Rotationsachse der Zentralwelle verlaufen Befestigungsstäbe. In Radialebenen der Messerwelle verlaufen jeweils zwei axial beabstandete Haltebleche, jeweils zwischen zwei benachbarten Befestigungsstäben, und zusätzlich noch befestigt an der Zentralwelle. Zwischen jedem Paar von Halteblechen ist jeweils ein Schlegelmesser angeordnet mittels eines Lagerbolzens, der sich durch die beiden Haltebleche und dort vorhandene Lagerungsbohrungen und auch das Lagerauge des Schlegelmessers sowie eine beidseitige Distanzbuchse zwischen Lagerauge und den Halteblechen hindurcherstreckt.

Dabei befinden sich die in Umfangsrichtung aufeinander folgenden Schlegelmesser nicht immer in der gleichen Radialebene, sondern sind in axialer Richtung zueinander versetzt um einen Teilbetrag der axialen Erstreckung eines Schlegelmessers, um in axialer Richtung der Messerwelle eine durchgängig gemähte Fläche zu hinterlassen.

Die zwischen dem gleichen Paar von Befestigungsstäben in axialer Richtung aufeinanderfolgenden Schlegelmesser können sich auf ein und derselben Mantellinie befinden, in der Regel sind die Schlegelmesser jedoch in Umfangsrichtung leicht zueinander versetzt, beispielsweise in zwei verschiedenen Gruppen auf zwei verschiedenen Mantellinien zwischen dem selben Paar von Befestigungsstäben angeordnet, um insgesamt eine möglichst gut ausgewuchtete Messerwelle zu erzielen.

Dabei befinden sich die Lagerbolzen nahe des äußeren Umfanges der Haltebleche und damit der Messerwelle, und der Abstand bis zum radial äußeren Ende ist deutlich geringer als die radiale Erstreckung eines Schlegelmessers. Gleichzeitig ist der radiale Abstand zwischen dem Lagerbolzen und der Zentralwelle groß genug, um ein Schlegelmesser dazwischen hindurch und somit um volle **360°** durchschwenken zu lassen.

Innerhalb einer Messerwelle sind alle Schlegelmesser in Umfangsrichtung mit gleicher Orientierung angeordnet, also beispielsweise mit der geraden, durchgehenden Schneidkante in Uhrzeigersinn weisend oder umgekehrt.

Eine äußere Verkleidung zwischen den Halteblechen in den Bereichen, in denen keine Schlegelmesser angeordnet sind, ist aus Gewichtsgründen nicht vorgesehen und wegen des relativ leichten Schneidgutes auch nicht notwendig.

### c) Ausführungsbeispiele

Ausführungsformen gemäß der Erfindung sind im Folgenden beispielhaft näher beschrieben. Es zeigen:
- Fig. **1:**: eine perspektivische Ansicht des Schlegelmessers,
- Fig. **2**a, b:: eine axiale Ansicht und einen radialen Schnitt durch das Schlegelmesser der Fig. **1****,**

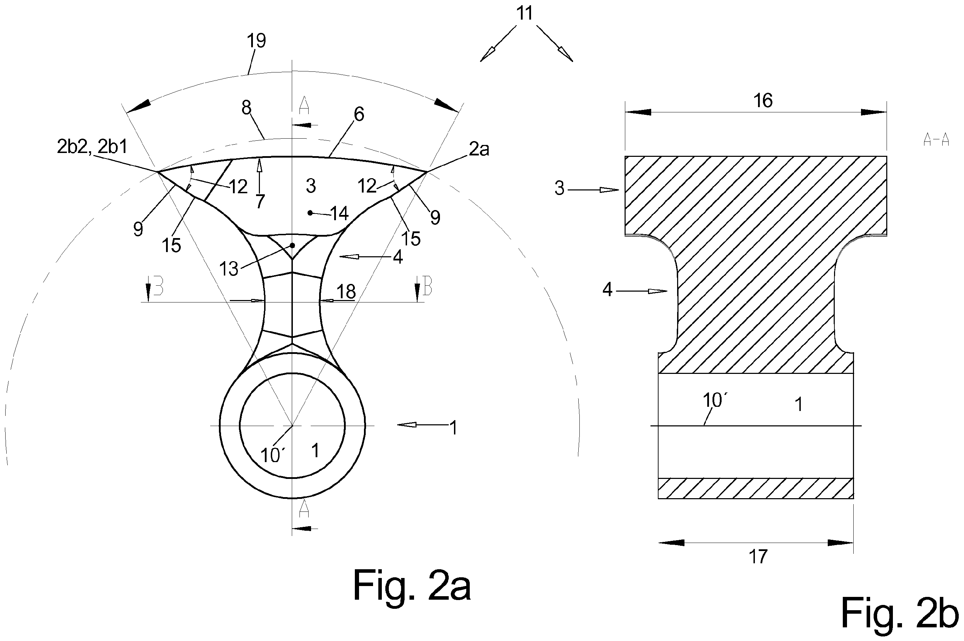

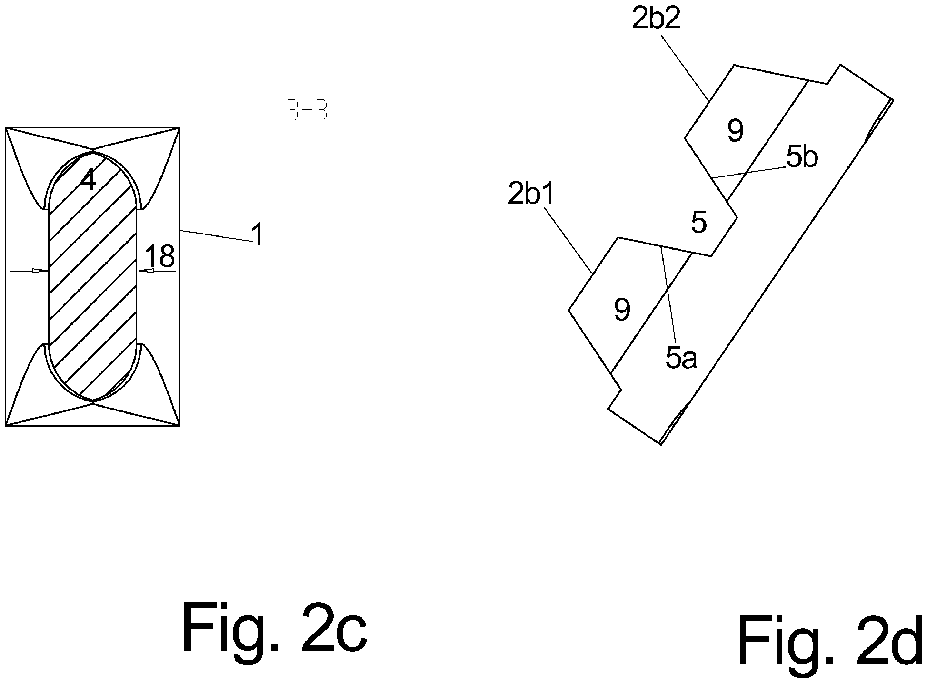

- Fig. **2**c:: einen Querschnitt durch den Schaft des Schlegelmessers,
- Fig. **2**d:: eine Detailvergrößerung,

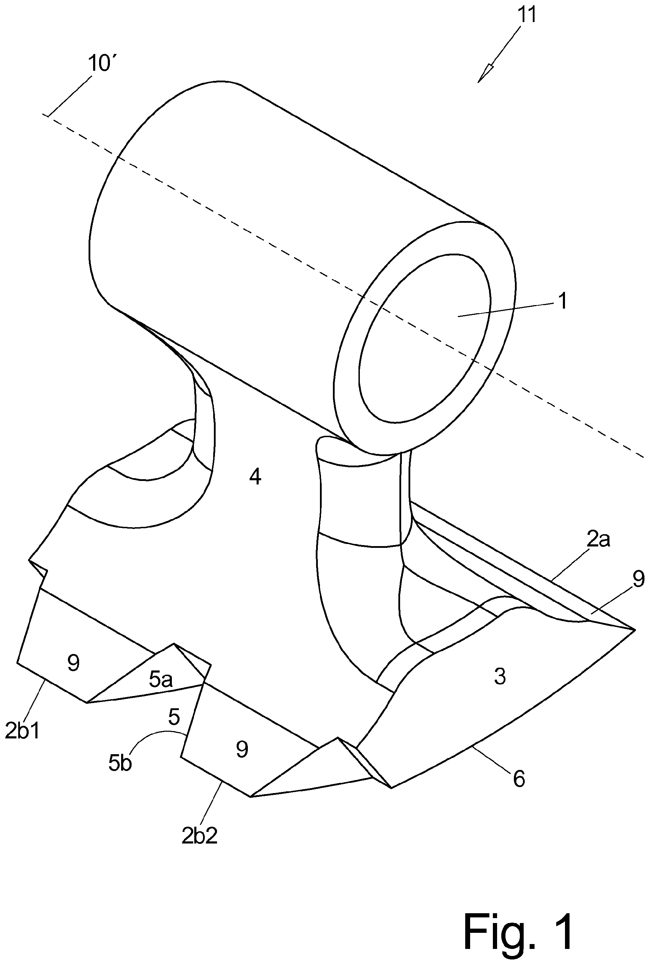

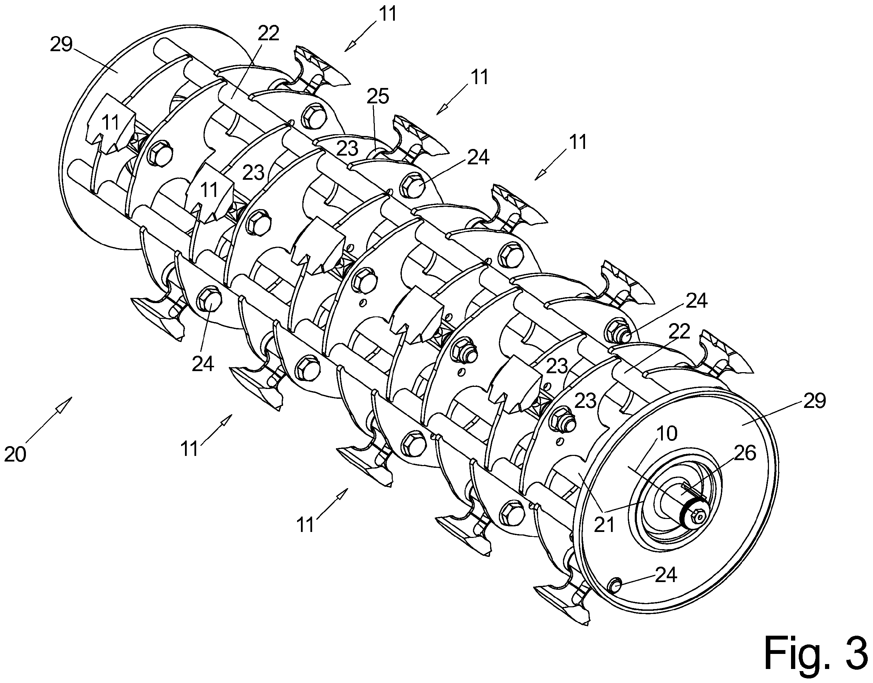

- Fig. **3**:: eine perspektivische Ansicht einer Messerwelle **20,** die mit den Schlegelmessern der Fig. **1** ausgestattet ist,

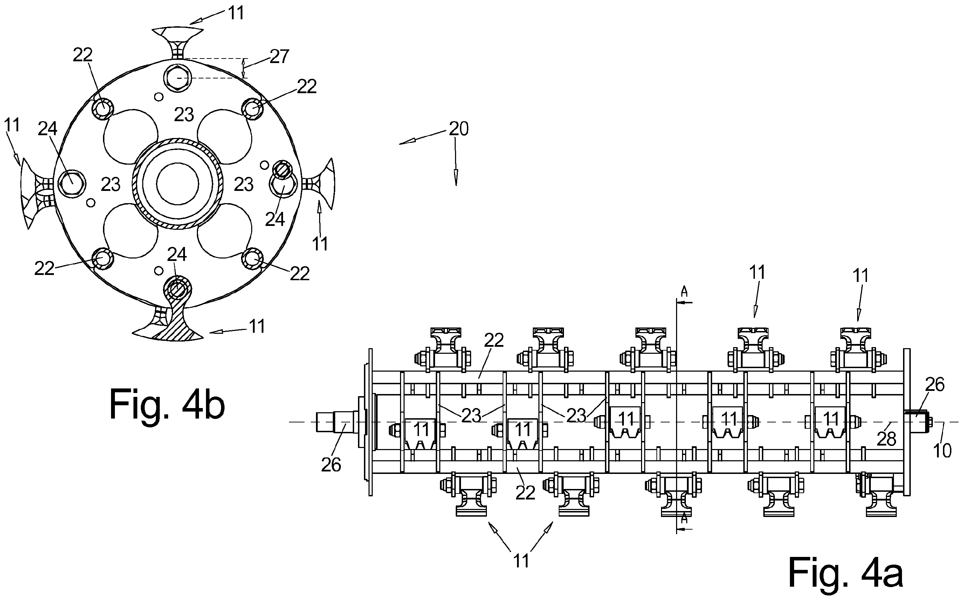

- Fig. **4**a:: eine Seitenansicht der Messerwelle der Fig. **3** und
- Fig. **4**b:: einen Axialschnitt durch die Messerwelle der Fig. **3****.**

Die **Figuren 1** sowie **Fig. 2a** und **b** zeigen ein einzelnes Schlegelmesser **11** im Ganzen:
Wie zu erkennen, besteht es einstückig aus einem Lagerungsauge **1** in Form einer in axialer Richtung durchgängigen Hülse zum Befestigen auf einem Lagerbolzen, einem sich auf einer Seite von dem Lagerauge **1** radial weg erstreckenden Schaft **4,** und einem daran radial anschließenden Messerkopf **3,** an dem in den beide entgegengesetzte Umfangsrichtungen weisend je eine Schneidkante **2**a, **2**b ausgebildet ist, welche jeweils parallel zur axialen Richtung **10'** des Lagerauges **1** verlaufen.

Wie am besten **Fig. 2a** zeigt, besitzt das Schlegelmesser **11** in der axialen Richtung **10'** betrachtet eine etwa Y-förmige oder pilzförmige Querschnittskontur, die in axialer Erstreckung im Wesentlichen gleichbleibt, bis auf die Tatsache dass - wie am besten der Radialschnitt in **Fig. 2b** zeigt - die Länge **16** des Messerkopfes in der axialen Richtung **10'** größer ist als die des Lagerauges **1** und auch größer als die des Schaftes **4,** der nochmals eine geringere Erstreckung als das Lagerauge **1** aufweist.

Der Schaft **4** ist dabei sowohl in axialer als auch in Umfangsrichtung so dünn wie möglich ausgeführt, um gerade noch die notwendige Stabilität zu bieten, und Gleiches gilt auch für die Wandstärke des Lagerauges **1,** denn das Ziel besteht darin, möglichst viel der Masse des Schlegelmessers **11,** welches in der Regel aus Stahl besteht, im Messerkopf **3** zu vereinen.

In der axialen Richtung der Fig. **2**a betrachtet ist erkennbar, dass der Schaft **4** von seiner Stelle mit geringster Dicke **18** im mittleren Bereich aus radial nach innen zum Lagerauge **1** hin als auch radial nach außen zum Messerkopf **3** hin zunehmend dicker wird, und dabei in das Lagerauge **1** ohne Absatz übergeht.

In den Messerkopf **3** dagegen geht diese Kontur in Form einer leichten Hohlkehle im Messerkopf **3** über, die mit der Unterseite **9** des Messerkopfes **3** jeweils eine Ecke **15** in der Kontur der Fig. **2** und damit eine Längskante bildet, die **einerseits** das Nachschleifen der Schneidkante **2**a, b von der Unterseite **9** her ermöglicht und andererseits den Schwerpunkt des Schlegelmessers **1** zusätzlich radial nach außen verlagert.

Auf diese Art und Weise liegt der Schwerpunkt **13** der Querschnittskontur, wie sie in **Fig. 2a** dargestellt ist, auf der Mittellinie der spiegelbildlichen Querschnittskontur, und radial außerhalb der geringsten Dicke **18** des Schaftes **4** im Übergang zum Messerkopf **3.**

Der reale Schwerpunkt **14** des gesamten Schlegelmessers **11** liegt sogar radial noch weiter außen wegen der schmaleren Ausbildung von Schaft und Lagerauge gegenüber dem Messerkopf und, zusätzlich etwas zur Schneidkante **2**a hin versetzt, denn wie Fig. **1** zeigt, ist nur die Schneidkante **2**a durchgehend und gerade über die gesamte axiale Länge des Messerkopfes **3** ausgebildet, während die andere Schneidkante **2**b unterbrochen ist durch eine Einkerbung **5,** so dass zwei getrennte Teil-Schneidkanten **2**b**1**, **2**b**2** entstehen, die zusätzlich nicht bis zum axialen Ende des Messerkopfes **3** durchgehen, sondern vorher enden.

Die Flanken **5**a, b der Einkerbung **5** nähern sich zum Grund der Einkerbung **5** hin gegeneinander an, und ebenso verlaufen die beiden einen Zahn, also eine Teil-Schneidkante **2**b**1** oder **2**b**2**, außen begrenzenden Flanken zum axial äußeren Ende des Messerkopfes **3,** wie **Fig. 2b** zeigt. Durch diese Form wird eine hohe Aufschlagkraft auf einer relativ kurzen Teilschneidkante **2**a**1**, **2**a, b konzentriert, und wegen des nach hinten dicker werdenden Zahnes hinter den Teilschneidkanten **2**b**1**, **2**b**2** besitzt dieser eine hohe Stabilität und zusätzlich eine gute Spaltwirkung, die sich mit zunehmendem Eindringen in ein zum Beispiel Holzstück axial weiter fortsetzt.

Wie der Querschnitt in axialer Richtung durch den Schaft **4** in **Fig. 2c** zeigt, hat der Schaft **4** in Umfangsrichtung eine deutlich geringere Dicke **18** als die entsprechende Erstreckung des Lagerauges **1,** und auch eine geringere axiale Erstreckung, und zusätzlich sind die Enden in axialer Richtung des Schaftes **4** gerundet, um dessen Masse zusätzlich zu reduzieren.

Wie **Fig. 2a** zeigt, erstreckt sich der Messerkopf **3** von der einen zur anderen Schneidkante über ein Winkelsegment **19** um die Schwenkachse **10'** des Schlegelmessers **11** herum, welches etwa **55°** beträgt. Dabei sind die Schneidkanten die radial gegenüber der Schwenkachse **10'** am weitesten vorstehenden Punkte der Querschnittskontur, denn die Außenkontur **6** des Messerkopfes **3,** die sich von der einen zur anderen Schneidkante erstreckt, ist weniger gekrümmt als der Flugkreis **8** des Schlegelmessers **11** um dessen Schwenkachse herum, so dass sich diese Außenkontur immer innerhalb dieses Flugkreises **8** befindet.

Diese Außenkontur **6** nimmt zur Unterseite **9** des Schneidkopfes einen Schneidwinkel **12** von etwa **42°** bis **44°** ein, wodurch zusammen mit der Tatsache, dass die Verbindungslinie zwischen den beiden Schneidkanten unter einem Winkel zwischen **25°** und **30°** zur Tangentialrichtung durch die Schneidkante an dem Flugkreis **8** liegt, teilweise selbstschärfende Eigenschaften der Schneidkanten bewirkt.

Das gesamte Schlegelmesser **11** ist einstückig einschließlich des hülsenförmigen Lagerauges **1,** so dass eine Befestigung nur mittels axialen Durchschiebens eines Lagerbolzens **24** an einem umgebenden Bauteil, beispielsweise einer Messerwelle **20,** möglich ist, wie sie in den **Figuren 3** sowie **4a, b** dargestellt ist:
Eine solche Messerwelle **20** rotiert um ihre axiale Richtung **10** und ist am Umfang mit einer Vielzahl sowohl axial als auch in Umfangsrichtung versetzten Schlegelmessern **11** gemäß der vorangehenden Figuren besetzt.

Die Schlegelmesser **11** sind um ihre Lageraugen **1** verschwenkbar, und sogar rotierbar um volle **360°** und stehen bei einer radial nach außen weisenden Lage - wie sie fliehkraftbedingt bei einer rotierenden Messerwelle **20** eingenommen wird - nach außen über das Gehäuse der Messerwelle **20** vor, und schlagen das Mähgut ab. Bei zu starkem Widerstand jedoch können die Schlegelmesser **11** entgegen der Auftreffrichtung auf ein Hindernis nach hinten wegklappen und sogar um ihr Lagerauge **1** rotieren, was einen Bruch oder eine Beschädigung des Schlegelmessers **11** vermeiden hilft.

Dies wird ermöglicht durch den Aufbau des Gehäuses dieser Messerwelle **20:**
Im Zentrum befindet sich die axial verlaufende Zentralwelle **21,** von der an den axialen Enden jeweils ein Lagerzapfen **26** vorsteht, der der Lagerung und dem Antrieb dieser Messerwelle **20** dient.

Die beiden axialen Enden des Gehäuses werden von jeweils einem runden Stirnblech **29** gebildet, welches auf der Zentralwelle **21** sitzt.

Radial außerhalb und über den Umfang verteilt zur Zentralwelle **21** sind zwischen den beiden Stirnblechen **29 -** die nicht unbedingt notwendig sind - axial verlaufende Befestigungsstäbe **22** angeordnet, in diesem Fall mit einem Winkelabstand von **90°.** Zwischen jedem Paar benachbarter Befestigungsstäbe **22** sind jeweils in einer Radialebene liegende, etwa kreissegmentförmige Haltebleche **23** axial beabstandet und in mehreren Paaren über die axiale Erstreckung der Messerwelle **20** vorhanden. Die Haltebleche **23** sind etwa dreieckig und einerseits mit je einer der beiden benachbarten Befestigungsstangen **22** und andererseits mit der Zentralwelle **21** verbunden, insbesondere verschweißt.

Der Abstand jedes Paares von Halteblechen **23** ist so bemessen, dass dazwischen ein Schlegelmesser **11** Platz finden kann, und zwar nicht nur mit seinem axial kurzen Lagerauge **1,** sondern auch mit seinem axial längeren Messerkopf **3,** falls dieser um das Lagerauge dreht, denn befestigt wird jedes Schlegelmesser **11** mittels eines Lagerbolzens **24,** der nahe des Außenumfanges durch je ein Paar von Halteblechen **23** gesteckt und verschraubt wird und dazwischen durch das Lagerauge **1** des Schlegelmessers **11** verläuft, wobei axial zwischen den Enden des Lagerauges **1** und den Halteblechen **23** je eine Distanzbuchse **25** angeordnet ist.

Wie **Fig. 3** und **Fig. 4a** zeigt, liegen die axial beabstandeten Schlegelmesser **11** zwischen demselben Paar von Befestigungsstäben **22** abschnittsweise auf der gleichen Mantellinie der Messerwelle **20,** jedoch nicht alle auf einer Mantellinie.

Zusätzlich sind die in Umfangsrichtung aufeinander folgenden Schlegelmesser **11** in axialer Richtung **10** zueinander versetzt und überlappen sich in axialer Richtung **10,** um eine durchgehend gemähte Fläche zu bewirken

Durch den Versatz in Umfangsrichtung wird eine zumindest im Neuzustand der Schlegelmesser **11** ausgewuchtete Messerwelle **20** erzielt.

Dadurch, dass ansonsten keine äußere, mitrotierende Verkleidung der Messerwelle existiert, können für das Auswechseln der Schlegelmesser **11** die verschraubten Lagerbolzen **24** von den jeweiligen Außenseiten des Paares von Halteblechen **23** aus gelöst und abgezogen werden, da der Abstand zwischen zwei zueinander benachbarten Paaren von Halteblechen **23,** in dem sich kein Schlegelmesser **11** befindet, in axialer Richtung ausreichend groß ist, um den Lagerbolzen **24** herausziehen zu können.

### BEZUGSZEICHENLISTE

- 1: Lagerauge
- **2**a, b: Schneidkante
- **2**b**1**, **2**b**2**: Teil-Schneidkante
- **3**: Messerkopf
- **4**: Schaft
- **5**: Einkerbung
- **5**a, b: Flanke
- **6**: Außenkontur
- **7**: Krümmungsradius
- **8**: Flugkreis
- **9**: Unterseite
- **10**: Rotationsachse Messerwelle
- **10'**: axiale Richtung des Lagerauges, Schwenkachse des Schlegelmessers
- **11**: Schlegelmesser
- **12**: Schneidwinkel
- **13**: Schwerpunkt der Kontur
- **14**: realer Schwerpunkt des Schlegelmessers
- **15**: Ecke
- **16**: Länge
- **17**: Länge
- **18**: Dicke
- **19**: Winkelsegment
- **20**: Messerwelle
- **21**: Zentralwelle
- **22**: Befestigungsstab
- **23**: Halteblech
- **24**: Lagerbolzen
- **25**: Distanzbuchse
- **26**: Lagerzapfen
- **27**: Abstand
- **28**: Mantellinie
- **29**: Stirnblech

## Patentansprüche

1. **Schlegelmesser** (**11**) für eine rotierende Messerwelle (**20**) mit
- einem Lagerauge (**1**),
- zwei von dem Lagerauge (**1**) radial entfernte Schneidkanten (**2**a, b) an einem Messerkopf (**3**), die in entgegengesetzte Umfangsrichtungen zeigen,
- einem Schaft (**4**), welcher das Lagerauge (**1**) mit dem Messerkopf (**3**) verbindet und in radialer Richtung verläuft,
**dadurch gekennzeichnet, dass**
- die eine Schneidkante (**2**a) in ihrer Verlaufsrichtung ohne Absatz durchgeht und die andere Schneidkante (**2**b) mindestens eine Einkerbung (**5**) in ihrem Verlauf aufweist, wodurch Teil-Schneidkanten (**2**b**1**, **2**b**2**) an dieser anderen Schneidkante (**2**b) entstehen,
- die Länge der Teil-Schneidkanten (**2**b**1**, **2**b**2**) zusammen maximal **80** % der axialen Länge (**16**) des Messerkopfes (3) beträgt,
- die Einkerbung (**5**) zum Boden der Einkerbung (**5**) hin aufeinander zu verlaufende Flanken (**5**a, b) aufweist.

2. Schlegelmesser (**11**) nach Anspruch **1**,
**dadurch gekennzeichnet, dass**
die durchgehende Schneidkante (**2**a) gerade verläuft.

3. Schlegelmesser (11) nach Anspruch **2**,
**dadurch gekennzeichnet, dass**
die Schneidkanten (**2**a, b) etwa parallel zur axialen Richtung (**10**') des Lagerauges (**1**) verlaufen
und/oder
die beiden entstehenden Teil-Schneidkanten (**2**b**1**, **2**b**2**) nicht bis zum axial äußeren Ende des Schneidkopfes (**3**) durchgehen.

4. Schlegelmesser (**11**) nach einem der vorangehenden Ansprüche,
**dadurch gekennzeichnet, dass**
die Länge der Teil-Schneidkanten (**2**b**1**, **2**b**2**) zusammen maximal **70** % der axialen Länge (**16**) des Messerkopfes (3) beträgt und insbesondere die Teil-Schneidkanten (**2**b**1**, **2**b**2**) in ihrer Verlaufsrichtung gerade sind.

5. Schlegelmesser (**11**) nach einem der vorhergehenden Ansprüche,
**dadurch gekennzeichnet, dass**
- der Messerkopf (**3**) betrachtet in axialer Richtung (**10**') eine Außenkontur (**6**) aufweist, die konvex gekrümmt ist und deren Krümmungsradius (**7**) höchstens **220**%, besser höchstens **210**%, besser höchstens **200**% des Flugkreis-Radius des Schlegelmessers **11** beträgt, und/oder
- in axialer Richtung (**10**') betrachtet die Kontur von Messerkopf (**3**) und Schaft (**4**) zusammen Y-förmig ist und insbesondere der Schaft (**4**) von einer schmalsten Stelle in seinem mittleren Bereich zum Lagerauge (**1**) hin breiter wird und ohne Absatz in diesen übergeht.

6. Schlegelmesser (**11**) nach einem der vorangehenden Ansprüche,
**dadurch gekennzeichnet, dass**
der Schneidwinkel (**12**) zwischen der Unterseite (**9**) und der Außenkontur (**6**) des Messerkopfes (**3**) <**60**°, besser < **50°,** besser **<44°** ist und/oder > **30°,** besser > **35°**, besser >**42°** ist.

7. Schlegelmesser (**11**) nach einem der vorangehenden Ansprüche,
**dadurch gekennzeichnet, dass**
in axialer Richtung (**10**') betrachtet der Schaft (**4**) von seinem schmalsten mittleren Bereich aus zum Messerkopf (**3**) hin breiter wird und insbesondere mit einem Absatz in die jeweilige Unterseite (**9**) des Messerkopfes (**3**) übergeht, indem die an die Schneidkante anschließende Unterseite (**9**) eine ebene Fläche ist und mit dem Ende der Außenkontur des Schaftes (**4**) eine konvexe Ecke (**15**) bildet.

8. Schlegelmesser (**11**) nach einem der vorangehenden Ansprüche,
**dadurch gekennzeichnet, dass**
der Schwerpunkt (**13**) der Querschnittskontur betrachtet in axialer Richtung (**1**) und/oder der reale Schwerpunkt (**14**) des Schlegelmessers (**11**) nicht weiter als **20**%, besser nicht weiter als **15**% des Flugkreisradius vom Flugkreis (**8**) radial nach innen versetzt angeordnet ist.

9. Schlegelmesser (**11**) nach einem der vorangehenden Ansprüche,
**dadurch gekennzeichnet, dass**
- die axiale Länge des Messerkopfes (**3**) größer ist als die axiale Länge des Lagerauges (**1**), insbesondere um mindestens **30**% größer, und/oder
- die axiale Länge des Schaftes (**4**) geringer ist als die axiale Länge (**16**) des Messerkopfes (**3**) und geringer ist als die axiale Länge (**17**) des Lagerauges (**1**), insbesondere dass die axiale Länge des Schaftes (**4**) maximal **70**%, besser maximal **60**% der axialen Länge des Messerkopfes (**3**) beträgt.

10. Schlegelmesser (**11**) nach einem der vorangehenden Ansprüche,
**dadurch gekennzeichnet, dass**
- der Querschnitt des Schaftes (**4**) geschnitten in axialer Richtung (**10**) gerundete, insbesondere spitzbogenförmige, Enden aufweist, und/oder
- die Dicke (**18**) des Schaftes (**4**) an seiner dünnsten Stelle - betrachtet in axialer Richtung (**10**') - maximal **30**%, besser maximal **20**%, besser maximal **17**% der Breite des Messerkopfes (**3**) beträgt.

11. Schlegelmesser (**11**) nach einem der vorangehenden Ansprüche,
**dadurch gekennzeichnet, dass**
- sich der Messerkopf (**20**) über ein Winkelsegment (**19**) von mindestens **45°,** besser mindestens **50°,** besser mindestens **55°** um die Schwenkachse (**10**') erstreckt, und/oder
- wenigstens das Lagerauge (**1**), insbesondere das gesamte Schlegelmesser (**11**) einstückig ausgebildet ist.

12. **Messerwelle** (**20**) mit Schlegelmessern (**11**), wobei
- die Messerwelle (**20**) eine Zentralwelle (**21**) aufweist, von der beidseits je ein Lagerzapfen (**26**) axial vorsteht,
- über den Umfang verteilt radial beabstandet außerhalb der Zentralwelle (**21**) liegende Befestigungsstäbe (**22**) vorhanden sind, sowie
- Haltebleche (**23**), die in Radialebenen zur Rotationsachse (**10**) der Messerwelle (**20**) paarweise axial beabstandet jeweils zwischen zwei benachbarten Befestigungsstäben (**22**) und der Zentralwelle (**21**) befestigt sind und
- zwischen jedem Paar von Halteblechen (**23**) jeweils ein Schlegelmesser (**11**) angeordnet ist mittels eines sich durch beide Haltebleche (**23**) und das Lagerauge (**1**) des Schlegelmessers (**11**) hindurcherstreckenden Lagerbolzens (**24**),
- der Lagerbolzen (**24**) näher am Außenumfang der Haltebleche (**23**) angeordnet ist, als der Flugkreisradius des Schlegelmessers (**11**) beträgt,
**dadurch gekennzeichnet, dass**
- die Schlegelmesser (**11**) zwei von dem Lagerauge (**1**) radial entfernte Schneidkanten (**2**a, b) an einem Messerkopf (**3**)aufweisen, die in entgegengesetzte Umfangsrichtungen zeigen,
- die Messerwelle (**20**) in beide Richtungen antreibbar ist,
- die Haltebleche (23) kreissegmentförmig und etwa dreieckig gestaltet sind und einerseits mit je einer der beiden benachbarten Befestigungsstangen (22) und andererseits mit der Zentralwelle (21) verbunden sind,
- der Abstand zwischen zwei zueinander benachbarten Paaren von Halteblechen (23), in dem sich kein Schlegelmesser (11) befindet, in axialer Richtung ausreichend groß ist, um die Lagerbolzen (24) herausziehen zu können,
- die axial beabstandeten Schlegelmesser (11) zwischen demselben Paar von Befestigungsstäben (22) abschnittsweise auf der gleichen Mantellinie der Messerwelle (20) liegen, jedoch nicht alle auf einer Mantellinie.

13. Messerwelle nach Anspruch **12**,
**dadurch gekennzeichnet, dass**
- der Abstand (**27**) zwischen Lagerbolzen (**24**) und dem Außenumfang der Zentralwelle (**21**) groß genug ist, um das Schlegelmesser (**11**) dazwischen hindurchschwenken und insbesondere um mehr als **360°** schwenken zu lassen, und/oder
- zwischen jedem Axialende des Lagerauges (**1**) und dem angrenzenden Halteblech (**23**) eine Distanzbuchse (**25**) angeordnet ist, so dass der freie Abstand zwischen den Halteblechen (**23**) größer ist als die axiale Erstreckung des gesamten Schlegelmessers (**11**), insbesondere des Messerkopfes (**3**) des Schlegelmessers (**11**).

14. Messerwelle nach einem der Ansprüche **12** bis **13**,
**dadurch gekennzeichnet, dass**
- höchstens einige der Lagerbolzen (**24**) zwischen zwei benachbarten Befestigungsstäben (**22**) auf einer gemeinsamen Mantellinie (**28**) der Messerwelle (**20**) angeordnet sind.

15. Messerwelle mit nach einem der Ansprüche **12** bis **14**,
**dadurch gekennzeichnet, dass**
die in Umfangsrichtung beabstandeten Schlegelmesser (**11**) nicht in der gleichen Radialebene angeordnet sind, sondern in axialer Richtung (**10**) um einen Teilbetrag der axialen Erstreckung des Schlegelmessers (**11**) zueinander versetzt angeordnet sind.

## Claims

1. A flail blade (11) for a rotating blade shaft (20), the flail blade comprising:
- a bearing eye (1),
- two cutting edges (2a, b) radially offset from the bearing eye (1) and arranged at a blade head (3), wherein the cutting edges are oriented in opposite circumferential directions,
- a shaft (4) which connects the bearing eye (1) with the blade head (3) and which extends in a radial direction,
**characterized in that**
- a first cutting edge (2a) extends without a shoulder and a second cutting edge (2b) includes at least one notch (5) in its extension so that partial cutting edges (2b1, 2b2) are provided at the second cutting edge (2b),
- a length of the partial cutting edges (2b1, 2b2) in combination amounts to at the most 80% of an axial length (16) of the blade head (3),
- the notch (5) includes flanks (5a, b) extending towards each other on a base of the notch (5).

2. The flail blade (11) according to claim 1, **characterized in that** the continuous cutting edge (2a) extends in a straight line.

3. The flail blade (11) according to claim 2,
**characterized in that**
the cutting edges (2a, b) extend approximately in parallel to an axial direction (10') of the bearing eye 1
and/or
the two partial cutting edges (2b1, 2b2) do not continue to the axial outer end of the cutting head (3).

4. The flail blade (11) according to one of the preceding claims,
**characterized in that**
a length of the partial cutting edges (2b1, 2b2) in combination is at the most 70% of an axial length (16) of the blade head (3) and in particular the partial cutting edges (2b1, 2b2) extend in a straight line.

5. The flail blade (11) according to one of the preceding claims,
**characterized in that**
- the blade head (3) includes an outer contour (6) in the axial direction (10') which outer contour is convex cambered and whose camber radius (7) is at the most 220%, better at the most 210%, better at the most 200% of a throwing circle radius of the flail blade (11) and/or
- viewed in the axial direction (10') the contour of the blade head (3) and the shaft (4) together is Y-shaped and in particular the shaft (4) broadens from a narrowest location in its center portion to the bearing eye (1) and transitions into the center portion without a shoulder.

6. The flail blade (11) according to one of the preceding claims,
**characterized in that**
- a cutting angle (12) between a bottom side (9) and the outer contour (6) of the blade head (3) is < 60°, better < 50°, better < 44°, and/or > 30°, better > 35°, better > 42°.

7. The flail blade (11) according to one of the preceding claims,
**characterized in that**
viewed in the axial direction (10') the shaft (4) broadens from its narrowest center portion to the blade head (3) and transitions in particular with a shoulder into a respective bottom side (9) of the blade head (3) **in that** the bottom side (9) adjoining the cutting edge is a flat surface and forms a convex corner (15) with an end of the outer contour of the shaft (4).

8. The flail blade (11) according to one of the preceding claims,
**characterized in that**
a center of gravity (13) of the cross sectional contour viewed in the axial direction (1), and/or an actual center of gravity (14) of the flail blade (11) is not offset in radial inward direction by more than 20%, better by not more than 15% of the throwing circle radius from the throwing circle (8).

9. The flail blade (11) according to one of the preceding claims, **characterized in that**
- an axial length of the blade head (3) is greater than an axial length of the bearing eye (1), in particular greater by at least 30% and/or
- an axial length of the shaft (4) is less than an axial length (16) of the blade head (3) and less than an axial length of the bearing eye (1) in particular wherein the axial length of the shaft (4) is at the most 70%, better at the most 60% of the axial length of the blade head (3).

10. The flail blade (11) according to one of the preceding claims,
**characterized in that**
- the cross section of the shaft (4) cut in the axial direction (10) includes rounded, in particular tipped arc shaped ends, and/or
- a thickness (18) of the shaft (4) at its thinnest location viewed in the axial direction (10') amounts to 30% at the most, better 20% at the most, better 17% at the most of a maximum width of the blade head (3).

11. The flail blade (11) according to one of the preceding claims,
**characterized in that**
- the blade head (20) extends over an angular segment (19) of at least 45%, better at least 50%, better at least 55% about the pivot axis (10'), and/or
- at least the bearing eye (1), in particular the entire flail blade (11) is configured integral in one piece.

12. A blade shaft (20) with the flail blades (11), wherein
- the blade shaft (20) includes a central shaft (21) from which a respective bearing pinion (26) protrudes axially on both sides,
- attachment rods (22) arranged radially offset outside of the central shaft (21) are provided, and
- support plates (23) that are axially offset in pairs in the radial plane of the rotation axis of blade shaft (20) are respectively attached between two adjacent attachment rods (22) and the central shaft (21), and
- between each pair of support plates (23) a respective flail blade (11) is arranged by a support bolt (24) extending through both support plates (23) and the bearing eye (1) of the flail blade (11),
- the bearing bolt (24) is arranged more proximal to an outer circumference of the support plates (23) than the throwing circle radius of the flail blade,
**characterized in that**
- the flail blades (11) include two cutting edges (2a, b) that are radially remote from the bearing eye (1) and arranged at the blade head (3) wherein the cutting edges are oriented in opposite circumferential directions,
- the blade shaft (20) is drivable in both directions,
- the support plates (23) are circular segment shaped and approximately configured triangular and connected on one side with one of the two adjacent connecting rods (22) and on the other side with the central shaft (21),
- a distance between two adjacent pairs of support plates in which no flail blade (11) is arranged is sufficiently large in the axial direction to be able to pull the support bolts (24) out,
- the axially offset flail blades (11) between the same pair of attachment rods (22) are in sections on an identical enveloping line of the blade shaft (20) but are not all arranged on a enveloping line.

13. The blade shaft according to claim 12,
**characterized in that**
- a distance (27) between the support bolt (24) and the outer circumference of the central shaft (21) is large enough to pivot the flail blade (11) through in between and in particular to pivot the flail blade by more than 360°, and/or
- a spacer bushing (25) is arranged between each axial end of the bearing eye (1) and the adjacent support plate (23) so that the free distance between the support plates (23) is greater than an axial extension of the entire flail blade (11), in particular of the blade head (3) of the flail blade (11).

14. The blade shaft according to one of the claims 12 - 13,
**characterized in that**
- at the most some of the bearing bolts (24) are arranged between two adjacent attachment rods (22) on a common enveloping line (28) of the blade shaft (20).

15. The blade shaft according to claims 12 - 14,
**characterized in that**
the circumferential offset flail blades (11) are not arranged in an identical radial plane, but offset from each other in the axial direction (10) by a partial amount of an axial extension of the flail blades (11).

## Revendications

1. Couteau de fléau (11) pour un arbre de de couteau rotatif (20) avec un premier
- oeillet de palier (1),
- deux arêtes de coupe (2a, b) éloignées radialement de l'oeillet de palier (1) sur une tête de couteau (3), et dirigées dans des directions périphériques opposées,
- une tige (4), qui relie l'oeillet de palier (1) à la tête de couteau (3) et s'étend en direction radiale,
**caractérisé en ce que**
- une arête de coupe (2a) est continue dans son parcours sans talon et l'autre arête de coupe (2b) présente au moins une encoche (5) sur son parcours, des arêtes de coupe partielles (2b1, 2b2) en résultant sur cette autre arête de coupe (2),
- la longueur des arêtes de coupe partielles (2b1, 2b2) représente au maximum 80 % de la longueur axiale (16) de la tête de couteau (3),
- l'encoche (5) présente des flancs (5a, b) s'étendant les uns vers les autres en direction du fond de l'encoche (5).

2. Couteau de fléau (11) selon la revendication 1,
**caractérisé en ce que**
l'arête de coupe continue (2a) est droite.

3. Couteau de fléau (11) selon la revendication 1,
**caractérisé en ce que**
les arêtes de coupe (2a, b) s'étendent à peu près parallèlement à la direction axiale (10') de l'oeillet de support (1)
et/ou
les deux arêtes partielles de coupe (2b1, 2b2) en résultant ne s'étendent pas jusqu'à l'extrémité axialement externe de la tête de coupe (3).

4. Couteau de fléau (11) selon l'une des revendications précédentes,
**caractérisé en ce que**
la longueur des arêtes partielles de coupe (2b1, 2b2) représente au maximum 80 % de la longueur axiale (16) de la tête de couteau (3) et en particulier les arêtes partielles de coupe (2b1, 2b2) sont droites sur leur parcours.

5. Couteau de fléau (11) selon l'une des revendications précédentes,
**caractérisé en ce que**
- la tête de coupe (3) observée dans la direction axiale (10) présente un contour externe(6) convexe et le rayon de courbure (7) s'élève au plus à 220 %, mieux 210 %, et encore mieux 200 % du rayon de cercle circulaire du couteau de fléau (11), et/ou
- observé dans la direction radiale (10), les contours de la tête de coupe (3) et de la tige (4) présentent ensemble une forme de Y et en particulier la tige (4) est plus large entre un endroit le plus étroit dans sa zone médiane en direction de de l'oeillet de support (1) pour rejoindre la tête sans talon.

6. Couteau de fléau (11) selon l'une des revendications précédentes,
**caractérisé en ce que**
l'angle de coupe (12) entre la face inférieure (9) et le contour externe (6) de la tête de coupe (3) est inférieur à 60°, au mieux 50°, mieux 44° et/ou supérieur à 30°, mieux à 35°, au mieux à 42°.

7. Couteau de fléau (11) selon l'une des revendications précédentes,
**caractérisé en ce que**
observé dans la direction radiale (10'), la tige (4) est plus large entre sa zone la plus étroite et la tête de mesure (3) et s'étend jusqu'à la face inférieure respective de la tête de coupe (3) et notamment avec un talon dans le fait que la face inférieure (9) attenante à l'arête de coupe est une surface plane et forme à l'extrémité du contour externe de la tige (4) un angle convexe (15).

8. Couteau de fléau (11) selon l'une des revendications précédentes,
**caractérisé en ce que**
le centre de gravité (13) du contour transversal, observé dans la direction axiale (1) et ou le véritable centre de gravité (14) du couteau de fléau (11) ne doit pas se trouver radialement décalé vers l'intérieur de plus de 20%, mieux de 15 % du rayon de cercle circulaire (8) du couteau de fléau (11).

9. Couteau de fléau (11) selon l'une des revendications précédentes,
**caractérisé en ce que**
- la longueur axiale de la tête de coupe (3) est supérieure à la longueur axiale de l'oeillet de palier (1), en particulier d'au moins 30 %,
et/ou
- la longueur axiale de la tige (4) est inférieure à la longueur axiale (16) de la tête de coupe (3) et à la longueur axiale (17) de l'oeillet de palier (1), en particulier que la longueur axiale de la tige (4) représente au maximum 70 %, au mieux 60 % de la longueur axiale de la tête de coupe (3).

10. Couteau de fléau (11) selon l'une des revendications précédentes,
**caractérisé en ce que**
- la section transversale de la tige, coupée dans la direction axiale (10), présente des extrémités arrondies, en particulier, ogivales, et/ou,
- l'épaisseur (18) de la tige (4) présente à son endroit le plus étroit - observé dans la direction axiale (10') - représente maximum 30 %, au mieux maximum 20 %, au mieux maximum 17, de la largeur de la tête de mesure (3).

11. Couteau de fléau (11) selon l'une des revendications précédentes,
**caractérisé en ce que**
- la tête de coupe (3) s'étend sur un segment angulaire (19) d'au moins 45°, au mieux d'au moins 50°, au mieux d'au moins 55° autour de l'axe du fléau (10) et/ou
- au moins l'oeillet de palier (1), en particulier l'ensemble du couteau de fléau (11) est réalisé d'un seul tenant.

12. Arbre de couteau (20) avec des couteaux de fléau (11)
- l'arbre de couteau (20) présentant un arbre central (21) dont fait saille axialement de part et d'autre un oeillet de palier (26),
- des barres de fixation (22) étant réparties radialement sur la périphérie à distance à l'extérieur de l'arbre central (21), ainsi que
- des tôles de support (23) étant fixées par paire et à distance dans des plans radiaux par rapport à l'axe de rotation (10) de l'arbre de couteau (20), respectivement entre deux barres de fixation opposées voisines (22) et l'arbre central (21), et
- un couteau de fléau (11) étant prévu entre chaque paire de tôles de support (22) au moyen d'un boulon de palier (24) traversant les deux tôles de support (23) et l'oeillet de palier (1) du couteau de fléau (11),
**caractérisé en ce que**
- les couteaux de fléau (11) présentent sur une tête de coupe (3) deux arêtes de coupe (2a, b) radialement espacées de l'oeillet de palier (1), dirigées dans des directions périphériques opposées,
- l'arbre de couteau (20) peut être entraîné dans les deux directions,
- les tôles de support (23) présentent une forme de segment de cercle et approximativement triangulaire et sont reliées d'une part à l'une des deux tiges de fixation (22) voisines et d'autre part à l'arbre central (21),
- la distance entre deux paires voisines de tôles de support (23), dans laquelle il n'y a pas d'oeillets de palier (11), est suffisamment importante dans la direction axiale pour que les boulons de palier (24) puissent être sortis,
- les couteaux de fléau (11) espacés axialement se trouvent entre la même paire de barre de fixation (22) par section sur la même génératrice de l'arbre de couteau (20), mais pas tous sur une génératrice.

13. Arbre de couteau (20) selon la revendication 12,
**caractérisé en ce que**
- la distance (27) entre le boulon de palier (24) et la périphérie externe de l'arbre central (21) est suffisante pour faire pivoter le couteau de fléau (11) dans cet espace et en particulier de 360° et/ou
- une douille d'écartement est disposée entre chaque extrémité axiale de l'oeillet de palier (1) et la tôle de support voisine (23) de sorte que l'espace libre entre les tôles de support (23) est supérieur à l'extension axiale de l'ensemble du couteau de fléau (11), en particulier de la tête de coupe (3) du couteau de fléau (11).

14. Arbre de couteau (20) selon l'une des revendications 12 à 13,
**caractérisé en ce qu'**
au plus quelques-uns des boulons de palier (24) sont disposés entre deux barres voisines de fixation (22) sur une génératrice commune (28) de l'arbre de couteau (20).

15. Arbre de couteau (20) selon l'une des revendications 12 à 13,
**caractérisé en ce que**
les couteaux de fléau (11) espacés dans la direction périphérique ne sont pas disposés dans le même plan radial mais décalés entre eux dans la direction axiale (10) d'une fraction de l'extension axiale du couteau de fléau (11).
